# EUROPEAN PATENT SPECIFICATION

(11) **EP 3 860 839 B1**
(45) Date of publication and mention of the grant of the patent: **07.12.2022**
(21) Application number: 19795327.6
(22) Date of filing: 01.10.2019
(51) Int. Cl.: B29D 30/00, B29D 30/06

(54) **METHOD FOR FEEDING GREEN TYRES TO CURING APPARATUSES, AND CURING LINE**
VERFAHREN ZUM ZUFÜHREN VON REIFENROHLINGEN ZU AUSHÄRTUNGSVORRICHTUNGEN UND VULKANISIERSTRASSE
PROCÉDÉ PERMETTANT D'INTRODUIRE DES PNEUS CRUS DANS DES APPAREILS DE VULCANISATION, ET LIGNE DE VULCANISATION

(30) Priority: 02.10.2018 IT 201800009080
(43) Date of publication of application: 11.08.2021
(73) Proprietor: Pirelli Tyre S.p.A., 20126 Milano (IT)
(72) Inventor: PALA, Simone Francesco, 20126 Milano (IT); NARDIN, Roberto, 20159 Milano (IT); PULICI, Lorenzo, 20126 Milano (IT); CERVETTI, Davide, 20126 Milano (IT)
(74) Representative: Metroconsult Srl
(86) International application number: PCT/IB2019/058327
(87) International publication number: WO 2020/070634

(56) References cited:
- EP-A1- 3 292 994
- WO-A1-2014/064614
- CN-A- 104 944 092

## Description

### DESCRIPTION

The present invention relates to a method for feeding green tyres to curing apparatuses.

The present invention also relates to a curing line for curing green tyres.

The Applicant observes that a tyre production process involves the building of green tyres, which are then subjected to a moulding and curing operation.

In production plants, green tyres are typically stored in dedicated areas or warehouses, from which they are progressively picked up in order to be fed to curing apparatuses.

The expression "automated guided vehicle", or "AGV", refers to an apparatus capable of moving autonomously on the basis of tracks indicating the path to be followed (e.g. wired, magnetic, optical, laser, etc. guide) and/or on the basis of a navigation system installed aboard the apparatus itself.

The expression "trolley" refers to a frame mounted on wheels or rollers and capable of supporting a plurality of green tyres. Said frame is preferably provided with one or more platforms, whereon green tyres can be positioned, e.g. 3-5 tyres per platform.

The video clip available on the Internet at https://www.youtoube.com/watch?v=YDsim2mRMJU (last viewed on October 1, 2018) shows a plant wherein each green tyre is transported from the storage area to the curing apparatuses through a respective overhead conveyor comprising a basket, in which the tyre is housed, and which is moved along an overhead guide until it arrives in proximity to a curing station. The basket is then lowered, so that it can be fed into the curing station.

Document CN104944092A describes an automatic transport system for a tyre production facility. The system comprises a unit for storing elastomeric compounds, a forming unit, a curing unit and a storage unit for finished tyres. Transportation of the products, return of excess material and empty tray recycling are carried out, between each pair of adjacent units, by means of an AGV. The AGV is controlled by means of a master control computer, and a command for an AGV transport mission is issued to a console in accordance with the site's material requirement conditions.

Document JP10329141 describes a plant wherein a mould lubricant coating device is adjacent to a moulding area where a green tyre is moulded. A coating area is equipped with a coating device for applying a lubricant agent to the green tyre, which is, in turn, positioned on a trolley and conveyed to the coating area by an AGV. The coating device coats the green tyre with lubricant agent while the tyre is on the trolley, when the trolley carrying the green tyre stops at a specified position. After the tyre has been coated with lubricant agent, the AGV transports the trolley carrying the green tyre to a curing area by passing through the moulding station and a storage station. Alongside each curing apparatus there is a respective loader, for loading the green tyres into the curing apparatus from the trolleys.

Document WO 2014/064614 A1 discloses a method for feeding green tyres to curing apparatuses, wherein one or more robotised arms are employed.

The Applicant observes that, for loading the green tyres into the curing apparatuses, and possibly also for the movements necessary for transporting the green tyres from the storage area to the area where the curing apparatuses are located, it is desirable that the plants be provided with an automated structure which is easy to install, which can operate correctly also within small spaces (e.g. industrial sheds of limited height), and which can be easily adapted to different contexts, for example due to structural modifications made to the production plant and/or transfer to another shed.

The Applicant observes that the above-mentioned solutions cannot fulfil these needs.

In particular, the Applicant observes that the video clip briefly described above shows a plant wherein the green-tyre handling structure is bulky and not flexible at all. In fact, in order to be installed and operate correctly, overhead conveyors require industrial sheds of considerable height (e.g. at least 5 metres). Moreover, overhead guides are fixed and require time-consuming and complex work whenever it is necessary to change their path or to move them, for example, to another site.

The Applicant observes that solutions like those described in CN104944092A and JP10329141 provide no teachings as to the automation of the loading of green tyres into curing apparatuses.

The Applicant has perceived that, if one wants to automate the loading of green tyres into curing apparatuses while keeping the plant layouts simple and flexible, without however lose efficiency and reliability, it is necessary to use AGVs in a smarter way and more extensively, thus preserving the efficiency of the production process within a flexible layout that can be easily modified when passing from one shed to another with the same apparatuses.

Finally, the Applicant has found that it is possible to solve the above-mentioned problems by providing one or more AGVs supporting respective robotized arms for loading green tyres (e.g. green tyres positioned on trolleys) to the curing apparatuses, thus making the plant layout simple and flexible in view of structural modifications.

More preferably, the green tyres can be brought into the pick-up positions for being loaded into the curing apparatuses, e.g. starting from a warehouse, by a further dedicated AGV.

In accordance with a first aspect, the invention relates to a method for feeding green tyres to curing apparatuses.

Preferably, it is envisaged to provide a plurality of storage units, each one supporting a plurality of green tyres.

Preferably, it is envisaged to provide a plurality of curing apparatuses, a loading position corresponding to each curing apparatus.

Preferably, it is envisaged to provide a first AGV supporting a first robotized arm.

Preferably, it is envisaged to provide a command and control unit.

Preferably, it is envisaged to provide, in proximity to a given curing apparatus of said curing apparatuses, a first storage unit of said plurality of storage units.

Preferably, it is envisaged to send to said first AGV, through said command and control unit, a first command signal for moving said first AGV to the loading position corresponding to said given curing apparatus.

Preferably, it is envisaged to send to said first robotized arm supported by said first AGV, through said command and control unit, a first pick-up command in order to activate said first robotized arm, so that said first robotized arm picks up a green tyre from said first storage unit and loads said green tyre into said given curing apparatus.

The Applicant believes that the above method can solve the aboveillustrated problems through the presence of specific AGVs, each one associated with a respective robotized arm, so as to allow for a simple automatic loading of green tyres into the curing apparatuses while preserving the simplicity and flexibility of the whole production plant.

In accordance with a second aspect, the invention relates to a curing line.

Preferably, curing apparatuses are provided, a loading position corresponding to each curing apparatus.

Preferably, a plurality of storage units are provided, each one supporting a plurality of green tyres.

Preferably, a first AGV is provided, supporting a first robotized arm.

Preferably, a command and control unit is provided.

Preferably, said command and control unit is configured for sending a first command signal to said first AGV for moving said first AGV to the loading position of a given curing apparatus of said curing apparatuses.

Preferably, said command and control unit is configured for sending a first pick-up command to said first robotized arm supported by said first AGV in order to activate said first robotized arm, so that said first robotized arm picks up a green tyre from a first storage unit of said plurality of storage units proximal to said given curing apparatus and loads said green tyre into said given curing apparatus.

In accordance with a further aspect, the invention relates to a system for feeding green tyres to curing apparatuses.

Preferably, a plurality of storage units are provided.

Preferably, each one of said storage units supports a plurality of green tyres.

Preferably, a first AGV is provided, supporting a first robotized arm.

Preferably, a command and control unit is provided.

Preferably, said command and control unit is configured for sending a first command signal to said first AGV for moving said first AGV to a loading position of a given curing apparatus of said curing apparatuses.

Preferably, said command and control unit is configured for sending a first pick-up command to said first robotized arm.

Preferably, said first pick-up command activates said first robotized arm, so that said first robotized arm picks up a green tyre from a first storage unit proximal to said given curing apparatus and loads said green tyre into said given curing apparatus.

In at least one of the above aspects, the present invention may have at least one of the following preferred features.

Preferably, prior to sending said first pick-up command, the command and control unit receives from said given curing apparatus a request signal representative of the fact that said given curing apparatus is ready to receive a green tyre to be cured.

Preferably, said plurality of curing apparatuses are arranged in at least a first row, a first feeding area, adapted to contain said first storage unit in proximity to said given curing apparatus, facing towards said first row of curing apparatuses, a first loading aisle being interposed between said first row of curing apparatuses and said first feeding area.

Preferably, said command and control unit sends a second command signal to a second AGV in order to activate said second AGV and transport said first storage unit in proximity to said given curing apparatus in said first feeding area.

Preferably, it is envisaged to select, through said command and control unit, said first storage unit among said plurality of storage units prior to sending said second command signal.

Preferably, said first storage unit is selected as a function of green tyres stored on said first storage unit.

Preferably, it is envisaged to associate, with each one of the storage units of said plurality of storage units, a reference representative of green tyres stored on each one of said storage units.

Preferably, it is envisaged to acquire, through said command and control unit, an identification code of green tyres to be fed to said given curing apparatus.

Preferably, it is envisaged to make, through said command and control unit, a comparison between said identification code and said references, and to select said first storage unit as a function of said comparison.

Preferably, it is envisaged to associate, with each one of the storage units of said plurality of storage units, a time parameter representative of a time of permanence of the green tyres stored on each one of said storage units.

Preferably, it is envisaged to determine, as a function of said comparison, through said command and control unit, a set of storage units comprising two or more storage units, and to select said first storage unit from said set of storage units on the basis of the respective time parameter.

Preferably, it is envisaged to associate with said first storage unit a respective counter, representative of the number of green tyres that are present on said first storage unit.

Preferably, it is envisaged to update said counter, through said command and control unit, whenever a green tyre is picked up from said first storage unit.

Preferably, it is envisaged to verify, through said command and control unit, when said respective counter arrives at zero.

Preferably, when said respective counter arrives at zero, it is envisaged to activate a removal operation in order to remove said first storage unit.

Preferably, said removal operation comprises sending to said second AGV, through said command and control unit, a third command signal in order to move said second AGV to said first storage unit.

Preferably, said removal operation comprises constraining said second AGV to said first storage unit.

Preferably, said removal operation comprises sending to said second AGV, through said command and control unit, a fourth command signal in order to move said second AGV and bring said first storage unit into a filling area.

Preferably, said second AGV, after having moved said first storage unit, sends to said command and control unit a notification signal representative of the fact that the position previously occupied by said first storage unit has been cleared.

Preferably, after the removal of said first storage unit, said command and control unit sends to said second AGV a fifth command signal for transporting a new storage unit of said plurality of storage units from a warehouse to said first feeding area.

Preferably, said first robotized arm is associated with a first vision tool, and it is envisaged, upon reception of said first pick-up signal, to activate said first vision tool in order to locate, on said first storage unit, a green tyre to be picked up.

Preferably, said first robotized arm is associated with a first vision tool, and it is envisaged to drive said first robotized arm in order to pick up said green tyre to be picked up and feed the same to said given curing apparatus.

Preferably, said plurality of loading positions are defined in said first loading aisle.

Preferably, said first command signal causes said first AGV to move into the loading position corresponding to said given curing apparatus.

Preferably, it is envisaged to provide, in said first loading aisle, a third AGV supporting a second robotized arm.

Preferably, upon reception by said command and control unit of an interruption signal representative of a point of interruption where said first loading aisle will be interrupted, respective positioning signals are sent to said first AGV and third AGV, through said command and control unit, in order to move said first AGV and said third AGV on opposite sides of said first loading aisle relative to said point of interruption.

Preferably, a plurality of feeding positions are defined in said first feeding area, each one associated with a corresponding curing apparatus.

Preferably, said second command signal causes said second AGV to move said first storage unit into a given feeding position.

Preferably, each loading position in said first loading aisle is coupled with a corresponding feeding position of said first feeding area.

Preferably, it is envisaged to provide a second row of curing apparatuses, a loading position corresponding to each curing apparatus of said second row, a second feeding area facing towards said second row of curing apparatuses, a second loading aisle being interposed between said second row of curing apparatuses and said second feeding area.

Preferably, it is envisaged to provide, in said second loading aisle, a fourth AGV supporting a third robotized arm.

Preferably, it is envisaged to send to said second AGV, through said command and control unit, a sixth command signal in order to activate said second AGV and transport a second storage unit of said plurality of storage units in proximity to another curing apparatus belonging to said second row of curing apparatuses in said second feeding area.

Preferably, it is envisaged to send to said fourth AGV, through said command and control unit, a seventh command signal for moving said fourth AGV along said second loading aisle up to the loading position corresponding to said other curing apparatus.

Preferably, it is envisaged to send to said third robotized arm, through said command and control unit, a second pick-up command in order to activate said third robotized arm, so that said third robotized arm picks up a green tyre from said second storage unit and loads said green tyre into said other curing apparatus of said second row of curing apparatuses.

Preferably, a transfer aisle runs alongside said first feeding area, said first feeding area being interposed between said first loading aisle and said transfer aisle.

Preferably, said transfer aisle is interposed between said first feeding area and said second feeding area.

Preferably, it is envisaged that, upon reception of said second command signal, said second AGV transports said first storage unit from a warehouse to said first feeding area, moving at least partly through said transfer aisle.

Preferably, a memory is provided in which a reference representative of green tyres stored on said storage units is associated with each one of the storage units of said plurality of storage units.

Preferably, said command and control unit is configured for acquiring an identification code of green tyres to be fed to said given curing apparatus.

Preferably, said command and control unit is configured for making a comparison between said identification code and said references.

Preferably, said command and control unit is configured for selecting said first storage unit as a function of said comparison.

Preferably, each storage unit of said plurality of storage units is associated in said memory with a time parameter representative of a time of permanence of the green tyres stored on each one of said storage units.

Preferably, said command and control unit is configured for determining, as a function of said comparison, a set of storage units comprising two or more storage units.

Preferably, said command and control unit is configured for selecting said first storage unit from said set of storage units on the basis of the respective time parameter.

Preferably, said first robotized arm is associated with a first vision tool mounted on said first AGV.

Preferably, upon reception of said first pick-up command, said first vision tool is configured for locating, on said first storage unit, a green tyre to be picked up.

Preferably, said command and control unit is configured for driving said first robotized arm in order to pick up said green tyre to be picked up and feed it to said given curing apparatus.

Preferably, each one of said storage units comprises a trolley.

Preferably, said first robotized arm is an anthropomorphic robotized arm with at least six axes of rotation.

Preferably, said curing apparatuses are arranged in at least a first row, a first feeding area, adapted to contain said first storage unit proximal to said given curing apparatus, facing towards said first row of curing apparatuses, a first loading aisle being interposed between said first row of curing apparatuses and said first feeding area.

Preferably, a third AGV is provided, equipped with a second robotized arm and operating in said first loading aisle.

Preferably, said command and control unit is configured for receiving an interruption signal, representative of a point of interruption where said first loading aisle will be interrupted.

Preferably, said command and control unit is configured for sending to said first AGV and said third AGV respective positioning signals in order to move said first AGV and said third AGV on opposite sides of said first loading aisle relative to said point of interruption.

Preferably, a transfer aisle runs alongside said first feeding area, said first feeding area being interposed between said first loading aisle and said transfer aisle.

Preferably, a second row of curing apparatuses is provided, a loading position corresponding to each curing apparatus of said second row, a second feeding area facing towards said second row of curing apparatuses, a second loading aisle being interposed between said second row of curing apparatuses and said second feeding area.

Preferably, a fourth AGV is provided, supporting a third robotized arm.

Preferably, said command and control unit is configured for sending to said second AGV a sixth command signal in order to activate said second AGV and transport a second storage unit of said plurality of storage units in proximity to another curing apparatus belonging to said second row of curing apparatuses in said second feeding area.

Preferably, said command and control unit is configured for sending to said fourth AGV a seventh command signal for moving said fourth AGV along said second loading aisle up to the loading position corresponding to said other curing apparatus.

Preferably, said command and control unit is configured for sending to said third robotized arm a second pick-up command in order to activate said third robotized arm, so that said third robotized arm picks up a green tyre from said second storage unit and loads said green tyre into said other curing apparatus of said second row of curing apparatuses.

Preferably, said transfer aisle is interposed between said first feeding area and said second feeding area.

Preferably, upon reception of said second command signal, said second AGV transports said first storage unit from a warehouse to said first feeding area, moving at least partly through said transfer aisle.

Preferably, said second robotized arm is an anthropomorphic robotized arm with at least six axes of rotation.

Preferably, said third robotized arm is an anthropomorphic robotized arm with at least six axes of rotation.

Preferably, said command and control unit is implemented by means of a processor.

Further features and advantages will become more apparent in the light of the following detailed description of a preferred but non-limiting embodiment of the invention. Reference will be made in the following description to the annexed drawings, which are also provided by way of illustrative and non-limiting example, wherein:
- Figure 1 shows a block diagram of a curing line in accordance with the present invention;
- Figures 2-4 show logic structures of data used in the curing line of Figure 1;
- Figure 5 shows a block diagram representative of signals exchanged among devices used in the curing line of Figure 1;
- Figures 6-9 and 11-13 show block diagrams of some devices of Figure 1;

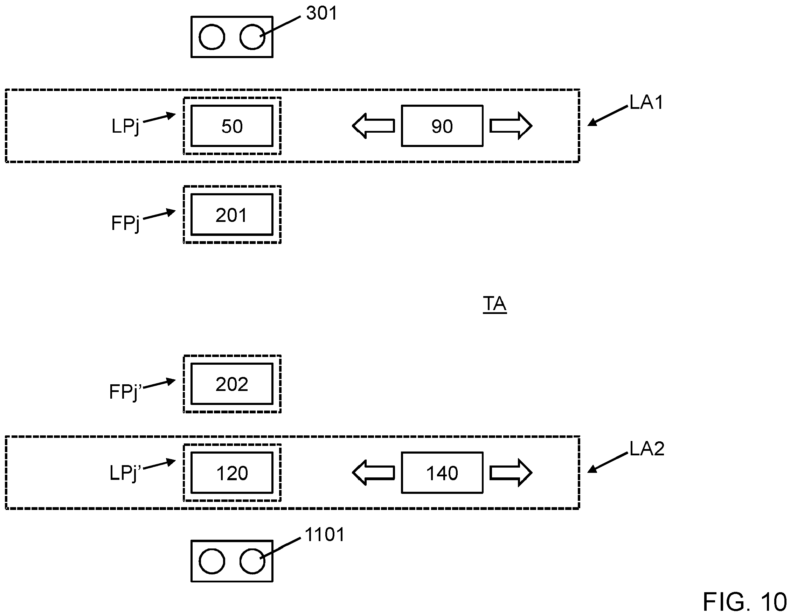

- Figure 10 shows an operating configuration of some elements of Figure 1;
- Figure 14 schematically shows a storage unit employed in the curing line of Figure 1.

With reference to the annexed drawings, reference numeral 1 designates a curing line in accordance with the present invention.

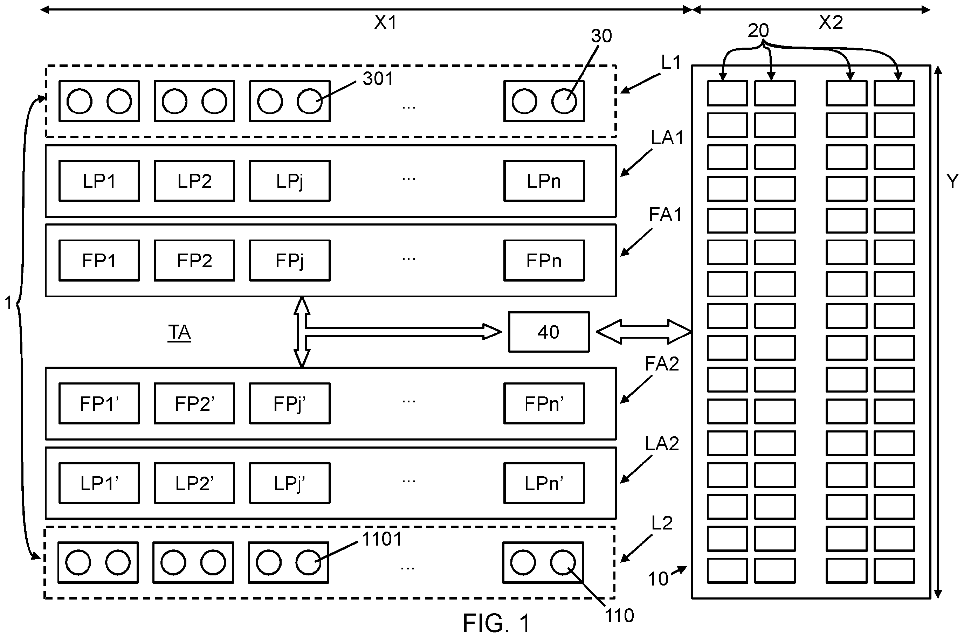

The curing line 1 (Figure 1) comprises a first row L1 of curing apparatuses 30.

Each curing apparatus 30 is configured for executing moulding and curing operations on green tyres.

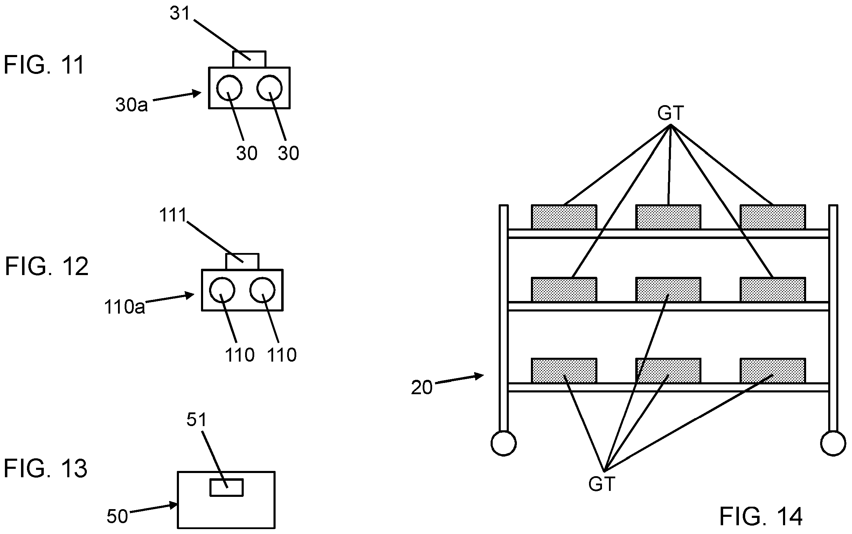

Note that the curing apparatuses 30 may form curing assemblies 30a, each one comprising, for example, two curing apparatuses 30 (Figure 11).

Preferably, each curing apparatus 30 (or each assembly 30a) is equipped with a communication device 31, for exchanging data and signals with a command and control unit, which will be described later on.

By way of example, the communication device 31 may use one or more of the following technologies: Wi-Fi, GPRS, UMTS, LTE, etc.

A first feeding area FA1 faces towards the first row L1 of curing apparatuses 30.

Preferably, a plurality of feeding positions FP1-FPn are defined in the first feeding area FA1, each one associated with a respective curing apparatus 30 of said first row L1.

As schematically shown in Figure 1, the feeding positions FP1-FPn are sequentially aligned along the first feeding area FA1, following the first row L1 of curing apparatuses 30.

A first loading aisle LA1 is interposed between the first row L1 of curing apparatuses 30 and the first feeding area FA1.

Preferably, a plurality of loading positions LP1-LPn are defined in the first loading aisle LA1, each one corresponding to a respective curing apparatus 30 of the first row L1.

As schematically shown in Figure 1, the loading positions LP1-LPn are sequentially aligned along the first loading aisle LA1, following the first row L1 of curing apparatuses 30.

Preferably, each feeding position FP1-FPn is associated with a respective loading position LP1-LPn.

In practical terms, one of the loading positions LP1-LPn and one of the feeding positions FP1-FPn correspond to each curing apparatus 30 of the first row L1.

As will become more apparent below, in the first feeding area FA1, and in particular in the feeding positions FP1-FPn, storage units are positioned in order to make green tyres available, and in the first loading aisle LA1 (in particular in the loading positions LP1-LPn) a robotized arm operates, which loads said green tyres into the curing apparatuses 30.

Preferably, the curing line 1 comprises a second row L2 of curing apparatuses 110.

Preferably, each curing apparatus 110 (or assembly 110a formed by curing apparatuses 110, as schematically shown in Figure 12) is equipped with a communication device 111, which is wholly similar to the above-mentioned communication device 31.

The curing apparatuses 110 of the second row L2 may be equal to the curing apparatuses 30 of the first row L1.

A second feeding area FA2 faces towards the second row L2 of curing apparatuses 110.

A second loading aisle LA2 is interposed between the second row L2 of curing apparatuses 110 and the second feeding area FA2.

As described above with reference to the first feeding area FA1 and the first loading aisle LA1, a plurality of feeding positions FP1'-FPn' are defined in the second feeding area FA2, and a plurality of loading positions LP1'-LPn' are defined in the second loading aisle LA2.

Preferably, a transfer aisle TA is interposed between the first feeding area FA1 and the second feeding area FA2.

The transfer aisle TA constitutes at least a part of the path connecting a warehouse 10 to the feeding areas FA1, FA2.

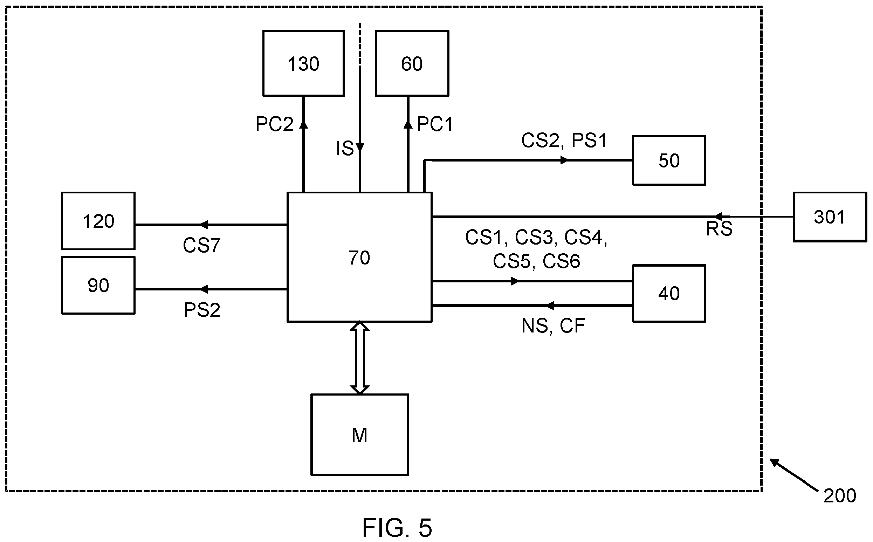

Advantageously, the curing line 1 comprises a system 200 (Figure 5) for feeding green tyres to the curing apparatuses 30, 110.

The system 200 comprises a plurality of storage units 20, located in the warehouse 10.

The warehouse 10 may be interposed, for example, between the curing area (where the first row L1 and second row L2 of curing apparatuses 30, 110 are located) and an area where green tyres are built.

Each storage unit 20 supports a plurality of green tyres GT. For example, each storage unit 20 supports 9-12 green tyres GT.

Preferably, each storage unit 20 is implemented as a trolley (Figure 14).

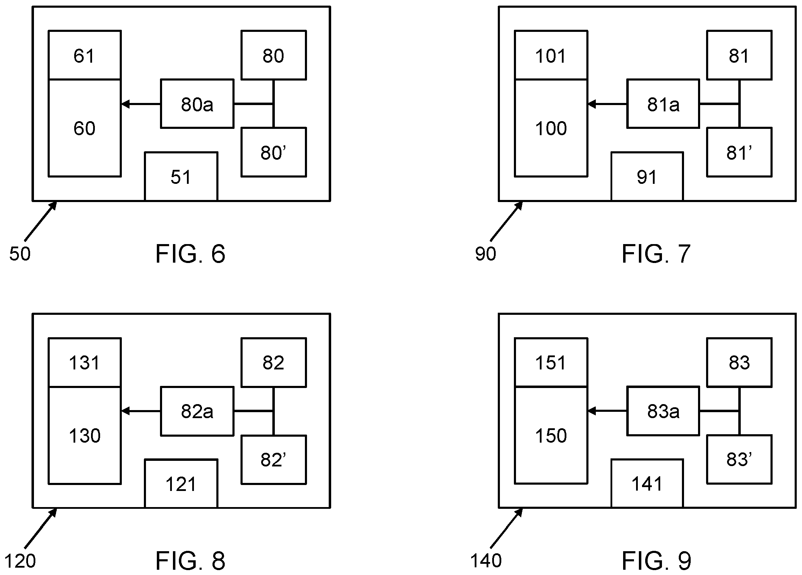

The system 200 comprises a first AGV 50 (Figure 6), supporting a first robotized arm 60.

The first AGV 50 operates in the first loading aisle LA1.

The system 200 further comprises a second AGV 40. As will become more apparent below, the second AGV 40 performs the task of picking up the storage units 20 from the warehouse 10 and bringing them into the first feeding area FA1 or the second feeding area FA2.

The second AGV 40 may also be used for removing from the first feeding area FA1 and from the second feeding area FA2 those storage units 20 that no longer contain any green tyres and therefore need to be filled.

Preferably, the first robotized arm 60 is an anthropomorphic robotized arm, more preferably having at least six axes of rotation.

Preferably, the first robotized arm 60 is associated with a first vision tool 80.

The first vision tool 80 is preferably mounted on the first AGV 50.

The first vision tool 80 may be, for example, a video camera.

The first vision tool 80 comprises, or is associated with, a first control unit 80a (e.g. implemented as a microprocessor) capable of processing the acquired images and recognizing the presence of a green tyre.

Preferably, the first vision tool 80 is associated with a respective first actuator 80', which moves the first vision tool 80 so as to scan specific spatial regions.

Preferably, the system 200 comprises a third AGV 90 (Figure 7).

The third AGV 90 supports a second robotized arm 100.

Preferably, the second robotized arm 100 is an anthropomorphic robotized arm, more preferably having at least six axes of rotation.

The third AGV operates along the first loading aisle LA1.

Just like the first AGV 50, the third AGV 90 also supports a second vision tool 81, a second control unit 81a and a respective second actuator 81', all of which operate in the same manner as the first vision tool 80, the first control unit 80a and the first actuator 80'.

The first AGV 50 and the third AGV 90, with their respective robotized arms 60, 100, load the green tyres GT from the storage units 20 located in the first feeding area FA1 into the curing apparatuses 30 of the first row L1.

In one embodiment, only the first AGV 50 is used, the third AGV 90 being absent.

In a different embodiment, both the first AGV 50 and the third AGV 90 are used. In this way it is possible to manage the loading of green tyres in an advantageous manner should an obstacle and/or an interruption be present in the first loading aisle LA1.

Preferably, the system 200 comprises a fourth AGV 120 (Figure 8).

The fourth AGV 120 supports a third robotized arm 130.

Preferably, the third robotized arm 130 is an anthropomorphic robotized arm, more preferably having at least six axes of rotation.

The fourth AGV 120 operates in the second loading aisle LA2.

In one embodiment, the system 200 comprises a fifth AGV 140 (Figure 9), operating in the second loading aisle LA2 and supporting a fourth robotized arm 150.

Preferably, the fourth robotized arm 150 is an anthropomorphic robotized arm, more preferably having at least six axes of rotation.

The fourth AGV 120 and the fifth AGV 140, with their respective robotized arms 130, 150, load the green tyres GT from the storage units 20 located in the second feeding area FA2 into the curing apparatuses 110 of the second row L2.

The fourth AGV 120 and the fifth AGV 140 are preferably equipped with a respective third vision tool 82 and fourth vision tool 83, a respective third actuator 82' and fourth actuator 83' and a respective third control unit 82a and fourth control unit 83a, as described above with reference to the first AGV 50 and third AGV 90.

In one embodiment, only the fourth AGV 120 is used, the fifth AGV 140 being absent.

In a different embodiment, both the fourth AGV 120 and the fifth AGV 140 are used. In this way it is possible to manage the loading of green tyres in an advantageous manner should an obstacle and/or an interruption be present in the second loading aisle LA2.

The system 200 further comprises said command and control unit, e.g. implemented as a processor 70 (Figure 5). The processor 70 performs the task of controlling the movements of the AGVs of the system 200 and the loading of green tyres into the curing apparatuses 30, 110.

Advantageously, the first AGV 50, the second AGV 40, the third AGV 90, the fourth AGV 120 and the fifth AGV 140 (Figures 6-9, 11) are equipped with respective communication modules 51, 41, 91, 121, 141, e.g. based on Wi-Fi, GPRS, UMTS, LTE, etc. technology, for exchanging signals with the processor 70.

Preferably, the first robotized arm 60, the second robotized arm 100, the third robotized arm 130 and the fourth robotized arm 150 (Figures 6-9) are equipped with respective communication systems 61, 101, 131, 151, e.g. based on Wi-Fi, GPRS, UMTS, LTE, etc. technology, for exchanging signals with the processor 70.

In its turn, the processor 70 is associated with a respective communication interface, configured to allow exchanging signals with the communication modules of the AGVs, with the communication systems of the robotized arms, and with the communication devices of the curing apparatuses.

The system 200 comprises a memory M, associated with the processor 70.

The memory M stores the data required by the processor 70 for controlling the AGVs and the loading of green tyres.

In particular, the memory M contains the following data:
- which positions in the warehouse 10 are occupied by a storage unit 20;
- for each occupied position, a reference REF representative of the green tyres loaded on the respective storage unit 20, and a time parameter TP representative of a time of permanence, in the warehouse 10, of the green tyres GT stored on the storage unit 20.

In practice, in the warehouse 10 each storage unit 20 is identified by means of the position it occupies; the logic relationship established in the memory M associates the position in which each storage unit 20 is located with the respective reference REF and the respective time parameter TP.

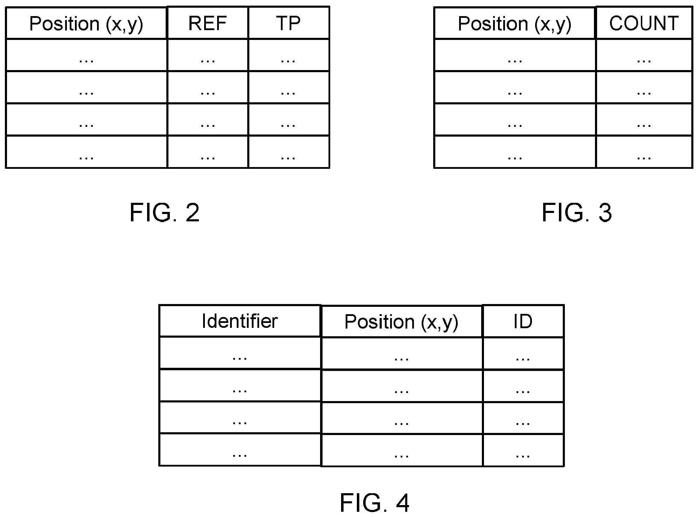

The table in Figure 2 schematically shows how these data may be structured in the memory M.

Preferably, the memory M stores data pertaining to the presence and position of a storage unit 20 within the first and/or second feeding areas FA1, FA2.

Preferably, for each storage unit 20 positioned in the first and/or second feeding areas FA1, FA2, the memory M stores a counter COUNT, representative of the number of green tyres GT that are present on the respective storage unit 20. As will become more apparent below, the value of the counter COUNT is updated whenever a green tyre is picked up from the storage unit 20 and fed to a curing apparatus 30, 110.

The table in Figure 3 schematically shows how these data may be structured in the memory M.

In addition to the above, the memory M advantageously contains data about the curing apparatuses 30, 110, and in particular:
- an identifier, which univocally identifies each apparatus;
- the position where each apparatus is located;
- an identification code ID that identifies the tyre type to be processed by the apparatus.

The table in Figure 4 schematically shows how these data may be structured in the memory M.

From an operational viewpoint, the processor 70 controls the execution of several operations on the basis of the data stored in the memory M and of the co-operation with the other devices belonging to the system 200, e.g.: transporting a storage unit 20 from the warehouse 10 to the first feeding area FA1 or the second feeding area FA2; loading green tyres GT from a storage unit 20 into curing apparatuses 30, 110; removing a storage unit 20 from the first feeding area FA1 and/or from the second feeding area FA2 when there are no longer any green tyres GT on said storage unit 20.

As for transporting a storage unit 20 from the warehouse 10 to the first feeding area FA1, the processor 70 initially receives a request signal RS from a given curing apparatus 301 of the first row L1.

Said request signal RS is typically generated by a curing apparatus when it has concluded a moulding and curing cycle and can therefore receive new green tyres to be processed.

The signal RS contains the identifier that allows the processor 70 to know which apparatus has generated the signal.

The processor 70 initially verifies if a storage unit 20 is already present in the first feeding area FA1, e.g. in the feeding position FPj corresponding to the given curing apparatus 301, which is supporting green tyres GT suitable for that given curing apparatus 301.

In the affirmative case, a loading operation is carried out, which will be described later on.

In the negative case, the processor 70 provides for identifying, in the warehouse 10, a storage unit 20 that can be used.

In particular, the processor 70 acquires an identification code ID of green tyres to be fed to that given curing apparatus 301.

Said identification code ID can be retrieved from the memory M, associated with the identifier of the given curing apparatus 301 (Table in Figure 4).

The processor 70 then compares the identification code ID with the references REF stored in the memory M (Table in Figure 2).

If there is only one storage unit 20 that meets the search criterion, that storage unit will be selected.

If there are several storage units 20 meeting the search criterion, the processor 70 will make a selection on the basis of the time parameters TP, in particular by selecting that storage unit 20 supporting green tyres GT which has the longest time of permanence in the warehouse 10.

Note that, in addition or as an alternative to the time of permanence in the warehouse 10, other criteria may also be employed, such as, for example, the position where the "candidate" storage units are located and the accessibility thereto by the second AGV 40.

Once the storage unit to be used has been determined - hereafter referred to as first storage unit 201 - the processor 70 sends a second command signal CS2 to the second AGV 40.

The second command signal CS2 activates the second AGV 40, causing the latter to transport the first storage unit 201 from the warehouse 10 to the first feeding area FA1, passing at least partly through the transfer aisle TA.

The second command signal CS2 contains, in fact, the information about the position of the first storage unit 201 in the warehouse 10.

Upon reception of the second command signal CS2, the second AGV 40 goes to the warehouse 10, in particular near the first storage unit 201, establishes a constraint with said first storage unit 201, and transports it to the first feeding area FA1.

Within the first feeding area FA1, the first storage unit 201 is positioned into the feeding position FPj associated with the given curing apparatus 301, i.e. the curing apparatus that generated the request signal RS.

Note that the position of the given curing apparatus 301 is known to the processor 70, when the second command signal CS2 is generated, because the request signal RS contains said identifier (or any other equivalent parameter), which, thanks to the data previously stored into the memory M (Table in Figure 4), the processor 70 can associate with a respective position.

The constraint between the second AGV 40 and the first storage unit 201 can be effected, for example, by lifting - by means of a suitable actuator - a platform or support element belonging to the first storage unit 201. Thus, the first storage unit 201 remains suspended, resting on said platform or support element, and is moved by the drive system of the second AGV 40.

Note that, as aforesaid, the curing apparatuses may form curing assemblies, each one comprising, for example, two curing apparatuses. The request signal RS may also concern a curing assembly. In such a case, after the first storage unit 201 has been properly positioned, the green tyres GT stored thereon will be loaded into both curing apparatuses included in said assembly.

After the first storage unit 201 has been positioned into the required feeding position FPj, the second AGV 40 sends a confirmation signal CF to the processor 70, so that the loading operation can be carried out.

Following the removal of the first storage unit 201 from the warehouse 10, the processor 70 updates the memory M, setting the position previously occupied by the first storage unit 201 as "available".

Upon reception of the confirmation signal CF, the processor 70 updates the memory M by entering the information about the occupation of the position FPj by the first storage unit 201.

The loading operation envisages that the processor 70 sends a first command signal CS1 to the first AGV 50 in order to cause the latter to move into the first loading aisle LA1 and reaches the loading position LPj corresponding to the feeding position FPj where the first storage unit 201 is located.

When the first AGV 50 is in that position, it informs the processor 70, and the latter sends a first pick-up signal PC1 to the first robotized arm 60, so that the first robotized arm 60 will pick-up a green tyre GT from the first storage unit 201 and load it into the given curing apparatus 301.

More in detail, the first pick-up command PC1 activates the first vision tool 80. The latter, in co-operation with the above-mentioned first control unit 80a and the above-mentioned first actuator 80', scans the first storage unit 201 until it finds a green tyre GT resting on one of the platforms of the first storage unit 201.

Once the green tyre to be picked up has been determined, the first robotized arm 60 is activated in order to pick up that green tyre and feed it to the given curing apparatus 301.

The first robotized arm 60 is so structured and positioned as to be able to gain access to all the green tyres GT that are present on the first storage unit 201. The first storage unit 201 (just like the other storage units 20) can be structured in such a way that the green tyres GT are arranged on multiple horizontal platforms, each platform lying at a different height. In this case, it may be necessary to lift an empty platform in order to be able to gain access to the underlying platform. This task may be carried out either by the first robotized arm 60 or by another device. Advantageously, the first robotized arm 60 can pick up and rotate the selected green tyre in order to load it into the given curing apparatus 301 at a given angle imposed by the conformation of the mould included in the given curing apparatus 301.

The first robotized arm 60 informs the processor 70 about the fact that the green tyre has been picked up, so that the processor 70 itself can update, in the memory M, the counter COUNT associated with the first storage unit 201.

When the value of the counter COUNT arrives at zero, i.e. when no green tyres are left on the first storage unit 201, the processor 70 activates a step of removing the first storage unit 201.

Note that, in principle, the first storage unit 201 can be positioned anywhere within the first feeding area FA1; in order to load the green tyres GT into the given curing apparatus 301, it is only necessary to move the first AGV 50 appropriately. The Applicant has noted, however, that it is usually more advantageous to position the first storage unit 201 into the feeding position FPj facing towards the given curing apparatus 301.

In order to carry out the removal step, the processor 70 sends a third command signal CS3 to the second AGV 40.

The third command signal CS3 causes the second AGV 40 to move near the first storage unit 201.

The feeding position FPj occupied by the first storage unit 201, previously stored in the memory M, is incorporated into the third command signal CS3, so that the second AGV can reach the correct location.

The second AGV 40 is then constrained to the first storage unit 201, preferably as described above with reference to the picking up of the first storage unit 201 from the warehouse 10.

The processor 70 then sends a fourth command signal CS4 to the second AGV 40, so that the first storage unit 201 is brought into a filling area.

In the filling area, the first storage unit 201 is filled again with green tyres and is then returned into the warehouse 10.

Note that the filling area may coincide with or be a part of the warehouse 10.

After the first storage unit 201 has been moved away from the first feeding area FA1, the second AGV 40 sends to said processor 70 a notification signal NS representative of the fact that the feeding position FPj, previously occupied by the first storage unit 201, has been cleared.

At this point, the second AGV 40 is ready to carry out further operations, e.g. receiving a fifth command signal CS5 from the processor 70 in order to transport a new storage unit 20 from the warehouse 10 to the first or second feeding area FA1, FA2.

As aforementioned, the first AGV 50 and the third AGV 90 can operate in the first loading aisle LA1.

This choice can be advantageous in many circumstances.

For example, when the number of curing apparatuses 30 in the first row L1 is particularly large, the two AGVs 50, 90 avoid any undesired delays in the process.

Another example is the management of any obstacles/interruptions that might be present in the first loading aisle LA1.

The Applicant observes that it is sometimes necessary to carry out maintenance, setup or repair work on a curing apparatus 30. In such a case, the entrusted operators and the necessary equipment are typically positioned in front of the curing apparatus involved, thus occupying part of the first loading aisle LA1 and, *de facto,* dividing it into two separate segments. The Applicant also observes that the interventions on the curing apparatuses 30 that cause such a situation are usually programmed; even in case of more urgent interventions, there is always a minimum lapse of time between the decision to execute an operation and the actual execution of the same.

It is therefore envisaged that the processor 70 receives an interruption signal IS, representative of the point where the first loading aisle LA1 will be interrupted.

The interruption signal IS may be generated automatically, e.g. by a scheduling routine managing programmed maintenance/setting interventions, or it may be entered manually by a user, e.g. in unforeseen or anyway unprogrammed cases.

Upon reception of the interruption signal IS, the processor 70 sends to said first and third AGVs 50, 90 respective positioning signals PS1, PS2 in order to move the first AGV 50 and the third AGV 90 on opposite sides of the first loading aisle LA1 relative to the point of interruption.

In this manner, each one of the first and third AGVs 50, 90 will be able to operate in a respective segment of the first loading aisle LA1, continuing to serve all the curing apparatuses 30 of the first row L1 - except for the one being serviced.

In addition or as an alternative, it may be envisaged that the first AGV 50/third AGV 90 can bypass the interruption or obstacle by changing their usual trajectory and by using a sufficient part of the transfer aisle TA to move past the interruption or obstacle. The Applicant observes that, in order to adopt this solution, it is preferable to define transversal passages in the first feeding area FA1, so that the modified trajectory of the first AGV 50/third AGV 90 will not be obstructed by the storage units positioned in the first feeding area FA1.

Note that in the above description reference has essentially been made only to the first row L1 of curing apparatus 30, the first loading aisle LA1, the first feeding area FA1 and the first AGV 50, the second AGV 40 and the third AGV 90.

As aforementioned, there is also a second row L2 of curing apparatuses 110, associated with a second loading aisle LA2 and a second feeding area FA2; the fourth AGV 120 and, preferably, the fifth AGV 140 operate in the second loading aisle LA2.

As regards the second row L2 of curing apparatuses 110, the operation of the curing line 1 is identical to that described above for the first row L1 of curing apparatuses 30.

The second AGV 40 is preferably used for carrying storage units 20 from the warehouse 10 to the second feeding area FA2, and for removing from the second feeding area FA2 those storage units from which all the green tyres GT have been picked up.

By way of example, the processor 70 is configured for sending to the second AGV 40 a sixth command signal CS6 in order to activate said second AGV 40 and transport a second storage unit 202 from the warehouse 10 to the second feeding area FA2, and in particular into a feeding position FPj' corresponding to a given curing apparatus 1101 of the second row L2 that sent a request signal to the processor 70.

The processor 70 is also configured for sending to the fourth AGV 120 a seventh command signal CS7 for moving the fourth AGV 120 along the second loading aisle LA2 and bringing the third robotized arm 130 near said second storage unit 202, i.e. into a loading position LPj' corresponding to the above-mentioned feeding position FPj'.

The processor 70 is configured for sending to the third robotized arm 130 a second pick-up command PC2 in order to activate the third robotized arm 130, so that the latter picks up a green tyre GT from the second storage unit 202 and loads said green tyre GT into the curing apparatus 1101.

The remaining steps are carried out exactly as described above with reference to the first row L1 of curing apparatuses 30.

The first row L1 and the second row L2 of curing apparatuses 30, 110, the first feeding area FA1 and the second feeding area FA2, the first loading aisle LA1 and the second loading aisle LA2, the transfer aisle TA and the warehouse 10 described above can be considered, within a plant, as a single module. A plant may comprise several modules, each one having a structure that is similar to the one described herein. In case of multiple modules, the number of AGVs to be used may be changed in light of the larger number of curing apparatuses to be served. By appropriately positioning and managing the various modules, it is also possible to employ a number of AGVs that is smaller than the simple product of the number of AGVs required for a single module and the number of modules in use.

## Claims

1. Method for feeding green tyres to curing apparatuses, said method comprising:
providing a plurality of storage units (20), each one supporting a plurality of green tyres (GT);
providing a plurality of curing apparatuses (30), wherein a loading position (LP1-LPn) corresponds to each curing apparatus;
providing a first AGV (50), supporting a first robotized arm (60);
providing a command and control unit;
providing, in proximity to a given curing apparatus (301) of said curing apparatuses (30), a first storage unit (201) of said plurality of storage units (20);
sending to said first AGV (50), through said command and control unit, a first command signal (CS1) for moving said first AGV (50) to the loading position (LP1-LPn) corresponding to said given curing apparatus (301);
sending to said first robotized arm (60) supported by said first AGV (50), through said command and control unit, a first pick-up command (PC1) in order to activate said first robotized arm (60), so that said first robotized arm (60) picks up a green tyre (GT) from said first storage unit (201) and loads said green tyre (GT) into said given curing apparatus (301).

2. Method according to claim 1, wherein:
prior to sending said first pick-up command (PC1), the command and control unit receives from said given curing apparatus (301) a request signal (RS) representative of the fact that said given curing apparatus (301) is ready to receive a green tyre to be cured.

3. Method according to any one of the preceding claims, wherein said plurality of curing apparatuses (30) are arranged in at least a first row (L1), a first feeding area (FA1), adapted to contain said first storage unit (201) in proximity to said given curing apparatus (301), facing towards said first row (L1) of curing apparatuses (30), a first loading aisle (LA1) being interposed between said first row (L1) of curing apparatuses (30) and said first feeding area (FA1).

4. Method according to claim 3, wherein said command and control unit sends a second command signal (CS2) to a second AGV (40) in order to activate said second AGV (40) and transport said first storage unit (201) in proximity to said given curing apparatus (301) in said first feeding area (FA1),
said method comprising selecting, through said command and control unit, said first storage unit (201) among said plurality of storage units (20) prior to sending said second command signal (CS2),
wherein said first storage unit (201) is selected as a function of green tyres (GT) stored on said first storage unit (201).

5. Method according to claim 4, comprising:
associating, with each one of the storage units (20) of said plurality of storage units, a reference (REF) representative of green tyres stored on each one of said storage units (20);
acquiring, through said command and control unit, an identification code (ID) of green tyres to be fed to said given curing apparatus (301);
making, through said command and control unit, a comparison between said identification code (ID) and said references (REF), and selecting said first storage unit (201) as a function of said comparison;
associating, with each one of the storage units (20) of said plurality of storage units, a time parameter (TP) representative of a time of permanence of the green tyres (GT) stored on each one of said storage units (20);
determining, as a function of said comparison, through said command and control unit, a set of storage units comprising two or more storage units, and selecting said first storage unit (201) from said set of storage units on the basis of the respective time parameter (TP).

6. Method according to any one of the preceding claims, comprising:
associating with said first storage unit (201) a respective counter (COUNT), representative of the number of green tyres (GT) that are present on said first storage unit (201);
updating said counter (COUNT), through said command and control unit, whenever a green tyre (GT) is picked up from said first storage unit (201);
verifying, through said command and control unit, when said respective counter (COUNT) arrives at zero;
when said respective counter (COUNT) arrives at zero, activating a removal operation in order to remove said first storage unit (201).

7. Method according to any one of claims 3 to 5, or according to claim 6 when dependent on claim 3, wherein said plurality of loading positions (LP1-LPn) are defined in said first loading aisle (LA1),
wherein said first command signal (CS1) causes said first AGV (50) to move into the loading position (LPi) corresponding to said given curing apparatus (301).

8. Method according to any one of claims 3 to 5, 7, or according to claim 6 when dependent on claim 3, comprising providing, in said first loading aisle (LA1), a third AGV (90) supporting a second robotized arm (100),
wherein, when said command and control unit receives an interruption signal (IS) representative of a point of interruption where said first loading aisle (LA1) will be interrupted, said command and control unit sends respective positioning signals (PS1, PS2) to said first AGV (50) and said third AGV (90) in order to move said first AGV (50) and said third AGV (90) on opposite sides of said first loading aisle (LA1) relative to said point of interruption.

9. Method according to any one of claims 3 to 5, 7, 8, or according to claim 6 when dependent on claim 3, wherein a plurality of feeding positions (FP1-FPn) are defined in said first feeding area (FA1), each one associated with a corresponding curing apparatus (30),
wherein said second command signal (CS2) causes said second AGV (40) to move said first storage unit (201) into a given feeding position (FPj).

10. Method according to any one of claims 3 to 5, 7 to 9, or according to claim 6 when dependent on claim 3, comprising:
providing a second row (L2) of curing apparatuses (110), a loading position (LP1'-LPn') corresponding to each curing apparatus of said second row (L2), a second feeding area (FA2) facing towards said second row (L2) of curing apparatuses (110), a second loading aisle (LA2) being interposed between said second row (L2) of curing apparatuses (110) and said second feeding area (FA2);
providing, in said second loading aisle (LA2), a fourth AGV (120) supporting a third robotized arm (130);
sending to said second AGV (40), through said command and control unit, a sixth command signal (CS6) in order to activate said second AGV (40) and transport a second storage unit (202) of said plurality of storage units (20) in proximity to another curing apparatus (1101) belonging to said second row (L2) of curing apparatuses (110) in said second feeding area (FA2);
sending to said fourth AGV (120), through said command and control unit, a seventh command signal (CS7) for moving said fourth AGV (120) along said second loading aisle (LA2) up to the loading position (LP1'-LPn') corresponding to said other curing apparatus (1101);
sending to said third robotized arm (130), through said command and control unit, a second pick-up command (PC2) in order to activate said third robotized arm (130), so that said third robotized arm (130) picks up a green tyre (GT) from said second storage unit (202) and loads said green tyre (GT) into said other curing apparatus of said second row (L2) of curing apparatuses (110).

11. Curing line comprising:
curing apparatuses (30), wherein a loading position (LP1-LPn) corresponds to each curing apparatus;
a plurality of storage units (20), each one supporting a plurality of green tyres (GT);
a first AGV (50), supporting a first robotized arm (60);
a command and control unit configured for:
i. sending to said first AGV (50) a first command signal (CS1) for moving said first AGV (50) to the loading position (LP1-LPn) of a given curing apparatus (301) of said curing apparatuses (30);
ii. sending to said first robotized arm (60) supported by said first AGV (50) a first pick-up command (PC1) in order to activate said first robotized arm (60), so that said first robotized arm (60) picks up a green tyre (GT) from a first storage unit (201) of said plurality of storage units (20) proximal to said given curing apparatus (301) and loads said green tyre (GT) into said given curing apparatus (301).

12. Curing line according to claim 11, comprising a memory (M), in which a reference (REF) representative of green tyres stored on said storage units (20) is associated with each one of the storage units (20) of said plurality of storage units,
wherein said command and control unit is configured for:
acquiring an identification code (ID) of green tyres to be fed to said given curing apparatus (301);
making a comparison between said identification code (ID) and said references (REF);
selecting said first storage unit (201) as a function of said comparison.

13. Curing line according to claim 11 or 12, wherein said first robotized arm (60) is associated with a first vision tool (80) mounted on said first AGV (50),
wherein, upon reception of said first pick-up command (PC1), said first vision tool (80) is configured for locating, on said first storage unit (201), a green tyre (GT) to be picked up,
wherein said command and control unit is configured for driving said first robotized arm (60) in order to pick up said green tyre to be picked up and feed it to said given curing apparatus (301).

14. Curing line according to any one of claims 11 to 13, wherein said curing apparatuses (30) are arranged in at least a first row (L1), a first feeding area (FA1), adapted to contain said first storage unit (201) in proximity to said given curing apparatus (301), facing towards said first row (L1) of curing apparatuses (30), a first loading aisle (LA1) being interposed between said first row (L1) of curing apparatuses (30) and said first feeding area (FA1),
wherein said curing line comprises a third AGV (90), equipped with a second robotized arm (100) and operating in said first loading aisle (LA1),
wherein said command and control unit is configured for:
receiving an interruption signal (IS), representative of a point of interruption where said first loading aisle (LA1) will be interrupted;
sending to said first AGV (50) and said third AGV (90) respective positioning signals (PS1, PS2) in order to move said first AGV (50) and said third AGV (90) on opposite sides of said first loading aisle (LA1) relative to said point of interruption.

15. Curing line according to claim 14, comprising:
a second row (L2) of curing apparatuses (110), a loading position (LP1'-LPn') corresponding to each curing apparatus of said second row (L2), a second feeding area (FA2) facing towards said second row (L2) of curing apparatuses (110), a second loading aisle (LA2) being interposed between said second row (L2) of curing apparatuses (110) and said second feeding area (FA2);
a fourth AGV (120), supporting a third robotized arm (130);
said command and control unit being configured for sending to said second AGV (40) a sixth command signal (CS6) in order to activate said second AGV (40) and transport a second storage unit (202) of said plurality of storage units (20) in proximity to another curing apparatus (1101) belonging to said second row (L2) of curing apparatuses (110) in said second feeding area (FA2);
said command and control unit being configured for sending to said fourth AGV (120) a seventh command signal (CS7) for moving said fourth AGV (120) along said second loading aisle (LA2) up to the loading position (LP1'-LPn') corresponding to said other curing apparatus (1101);
said command and control unit being configured for sending to said third robotized arm (130) a second pick-up command (PC2) in order to activate said third robotized arm (130), so that said third robotized arm (130) picks up a green tyre (GT) from said second storage unit (202) and loads said green tyre (GT) into said other curing apparatus (1101) of said second row (L2) of curing apparatuses (110).

## Patentansprüche

1. Verfahren zum Zuführen von Reifenrohlingen zu Aushärtungsvorrichtungen, wobei das Verfahren umfasst:
Bereitstellen einer Vielzahl von Lagereinheiten (20), von denen jede eine Vielzahl von Reifenrohlingen (GT) trägt;
Bereitstellen einer Vielzahl von Aushärtungsvorrichtungen (30), wobei jeder Aushärtungsvorrichtung eine Beschickungsposition (LP1-LPn) entspricht;
Bereitstellen eines ersten fahrerlosen Transportmittels (AGV, en: Automated Guided Vehicle) (50), das einen ersten Roboterarm (60) trägt;
Bereitstellen einer Befehls- und Steuereinheit;
Bereitstellen, in der Nähe einer vorgegebenen Aushärtungsvorrichtung (301) der Aushärtungsvorrichtungen (30), einer ersten Lagereinheit (201) der Vielzahl von Lagereinheiten (20);
Senden, durch die Befehls- und Steuereinheit, eines ersten Steuersignals (CS1) an ein erstes AGV (50), um das erste AGV (50) zu der Beschickungsposition (LP1-LPn) zu bewegen, die der vorgegebenen Aushärtungsvorrichtung (301) entspricht;
Senden, durch die Befehls- und Steuereinheit, eines ersten Aufnahmebefehls (PC1) an den ersten Roboterarm (60), der von dem ersten AGV (50) getragen wird, um den ersten Roboterarm (60) zu aktivieren, damit der erste Roboterarm (60) einen Reifenrohling (GT) von der ersten Lagereinheit (201) aufnimmt und mit dem Reifenrohling (GT) die vorgegebene Aushärtungsvorrichtung (301) beschickt.

2. Verfahren nach Anspruch 1, wobei
die Befehls- und Steuereinheit vor dem Senden des ersten Aufnahmebefehls (PC1) ein Anforderungssignal (RS) von der vorgegebenen Aushärtungsvorrichtung (301) empfängt, das angibt, dass die vorgegebene Aushärtungsvorrichtung (301) bereit ist, einen auszuhärtenden Reifenrohling aufzunehmen.

3. Verfahren nach einem der vorhergehenden Ansprüche, wobei die Vielzahl von Aushärtungsvorrichtungen (30) in mindestens einer ersten Reihe (L1) angeordnet sind, wobei ein erster Zuführbereich (FA1), der die erste Lagereinheit (201) in der Nähe der vorgegebenen Aushärtungsvorrichtung (301) enthalten kann, der ersten Reihe (L1) von Aushärtungsvorrichtungen (30) zugewandt ist, und ein erster Beschickungsgang (LA1) zwischen der ersten Reihe (L1) von Aushärtungsvorrichtungen (30) und dem ersten Zuführbereich (FA1) angeordnet ist.

4. Verfahren nach Anspruch 3, wobei die Befehls- und Steuereinheit ein zweites Befehlssignal (CS2) an ein zweites AGV (40) sendet, um das zweite AGV (40) zu aktivieren und die erste Lagereinheit (201) in die Nähe der vorgegebenen Aushärtungsvorrichtung (301) in dem ersten Zuführbereich (FA1) zu transportieren,
wobei das Verfahren das Auswählen, durch die Befehls- und Steuereinheit, der ersten Lagereinheit (201) aus der Vielzahl von Lagereinheiten (20) vor dem Senden des zweiten Befehlssignals (CS2) umfasst,
wobei die erste Lagereinheit (201) in Abhängigkeit von auf der ersten Lagereinheit (201) gelagerten Reifenrohlingen (GT) ausgewählt wird.

5. Verfahren nach Anspruch 4, umfassend:
Zuordnen einer Referenz (REF), die für die auf jeder der Lagereinheiten (20) gelagerten Reifenrohlinge repräsentativ ist, zu jeder der Lagereinheiten (20) der Vielzahl von Lagereinheiten;
Erfassen eines Identifizierungscodes (ID) der Reifenrohlinge, die der vorgegebenen Aushärtungsvorrichtung (301) zugeführt werden sollen, durch die Befehls- und Steuereinheit;
Durchführen eines Vergleichs zwischen dem Identifizierungscode (ID) und den Referenzen (REF) durch die Befehls- und Steuereinheit und Auswählen der ersten Lagereinheit (201) in Abhängigkeit von dem Vergleich;
Zuordnen eines Zeitparameters (TP), der für eine Verweildauer der auf jeder der Lagereinheiten (20) gelagerten Reifenrohlinge repräsentativ ist, zu jeder der Lagereinheiten (20) der Vielzahl von Lagereinheiten;
Bestimmen, durch die Befehls- und Steuereinheit, eines Satzes von Lagereinheiten, der zwei oder mehr Lagereinheiten umfasst, in Abhängigkeit von dem Vergleich und Auswählen der ersten Lagereinheit (201) aus dem Satz von Lagereinheiten auf der Grundlage des jeweiligen Zeitparameters (TP).

6. Verfahren nach einem der vorhergehenden Ansprüche, umfassend: Zuordnen eines jeweiligen Zählers (COUNT), der die Anzahl der Reifenrohlinge (GT) repräsentiert, die auf der ersten Lagereinheit (201) vorhanden sind, zu der ersten Lagereinheit (201);
Aktualisieren des Zählers (COUNT) durch die Befehls- und Steuereinheit, immer wenn ein Reifenrohling (GT) von der ersten Lagereinheit (201) aufgenommen wird;
Überprüfen, durch die Befehls- und Steuereinheit, wann der jeweilige Zähler (COUNT) bei null anlangt;
wenn der jeweilige Zähler (COUNT) bei null anlangt, Aktivieren eines Abtransportvorgangs, um die erste Lagereinheit (201) abzutransportieren.

7. Verfahren nach einem der Ansprüche 3 bis 5 oder nach Anspruch 6, bei Abhängigkeit von Anspruch 3, wobei die Vielzahl von Beschickungspositionen (LP1-LPn) in dem ersten Beschickungsgang (LA1) definiert sind,
wobei das erste Befehlssignal (CS1) das erste AGV (50) veranlasst, sich an die Beschickungsposition (LPi) zu bewegen, die der vorgegebenen Aushärtungsvorrichtung (301) entspricht.

8. Verfahren nach einem der Ansprüche 3 bis 5, 7 oder nach Anspruch 6, bei Abhängigkeit von Anspruch 3, das umfasst, in dem ersten Beschickungsgang (LA1) ein drittes AGV (90) bereitzustellen, das einen zweiten Roboterarm (100) trägt,
wobei, wenn die Befehls- und Steuereinheit ein Unterbrechungssignal (IS) empfängt, das für eine Unterbrechungsstelle repräsentativ ist, an welcher der erste Beschickungsgang (LA1) unterbrochen werden soll, die Befehls- und Steuereinheit jeweilige Positionierungssignale (PS1, PS2) an das erste AGV (50) und das dritte AGV (90) sendet, um das erste AGV (50) und das dritte AGV (90) zu in Bezug auf die Unterbrechungsstelle gegenüberliegenden Seiten des ersten Beschickungsgangs (LA1) zu bewegen.

9. Verfahren nach einem der Ansprüche 3 bis 5, 7, 8 oder nach Anspruch 6, bei Abhängigkeit von Anspruch 3, wobei in dem ersten Zuführbereich (FA1) eine Vielzahl von Zuführpositionen (FP1-FPn) definiert sind, von denen jede einer entsprechenden Aushärtungsvorrichtung (30) zugeordnet ist, wobei das zweite Befehlssignal (CS2) das zweite AGV (40) veranlasst, die erste Lagereinheit (201) an eine vorgegebene Zuführposition (FPj) zu bewegen.

10. Verfahren nach einem der Ansprüche 3 bis 5, 7 bis 9 oder nach Anspruch 6, bei Abhängigkeit von Anspruch 3, umfassend:
Bereitstellen einer zweiten Reihe (L2) von Aushärtungsvorrichtungen (110), jeder Aushärtungsvorrichtung der zweiten Reihe (L2) entsprechend einer Beschickungsposition (LP1'-LPn'), eines zweiten Zuführbereichs (FA2), der der zweiten Reihe (L2) von Aushärtungsvorrichtungen (110) zugewandt ist, eines zweiten Beschickungsgangs (LA2), der zwischen der zweiten Reihe (L2) von Aushärtungsvorrichtungen (110) und dem zweiten Zuführbereich (FA2) angeordnet ist;
Bereitstellen eines vierten AGV (120), das einen dritten Roboterarm (130) trägt, in dem zweiten Beschickungsgang (LA2);
Senden, durch die Befehls- und Steuereinheit, eines sechsten Befehlssignals (CS6) an das zweite AGV (40), um das zweite AGV (40) zu aktivieren und eine zweite Lagereinheit (202) der Vielzahl von Lagereinheiten (20) in die Nähe einer anderen Aushärtungsvorrichtung (1101) zu transportieren, die zu der zweiten Reihe (L2) von Aushärtungsvorrichtungen (110) in dem zweiten Zuführbereich (FA2) gehört;
Senden, durch die Befehls- und Steuereinheit, eines siebten Befehlssignals (CS7) an das vierte AGV (120), um das vierte AGV (120) den zweiten Beschickungsgang (LA2) entlang bis zu der Beschickungsposition (LP1'-LPn') zu bewegen, die der anderen Aushärtungsvorrichtung (1101) entspricht;
Senden, durch die Befehls- und Steuereinheit, eines zweiten Aufnahmebefehls (PC2) an den dritten Roboterarm (130), um den dritten Roboterarm (130) zu aktivieren, damit der dritte Roboterarm (130) einen Reifenrohling (GT) aus der zweiten Lagereinheit (202) aufnimmt und mit dem Reifenrohling (GT) die andere Aushärtungsvorrichtung der zweiten Reihe (L2) von Aushärtungsvorrichtungen (110) beschickt.

11. Vulkanisierstraße, umfassend:
Aushärtungsvorrichtungen (30), wobei jeder Aushärtungsvorrichtung eine Beschickungsposition (LP1-LPn) entspricht;
eine Vielzahl von Lagereinheiten (20), von denen jede eine Vielzahl von Reifenrohlingen (GT) trägt;
ein erstes AGV (50), das einen ersten Roboterarm (60) trägt;
eine Befehls- und Steuereinheit, die zu Folgendem konfiguriert ist:
i. Senden eines ersten Befehlssignals (CS1) an das erste AGV (50), um das erste AGV (50) zu der Beschickungsposition (LP1-LPn) einer vorgegebenen Aushärtungsvorrichtung (301) der Aushärtungsvorrichtungen (30) zu bewegen;
ii. Senden eines ersten Aufnahmebefehls (PC1) an den ersten Roboterarm (60), der von dem ersten AGV (50) getragen wird, um den ersten Roboterarm (60) zu aktivieren, damit der erste Roboterarm (60) einen Reifenrohling (GT) von einer ersten Lagereinheit (201) der Vielzahl von Lagereinheiten (20) in der Nähe der vorgegebenen Aushärtungsvorrichtung (301) aufnimmt und mit dem Reifenrohling (GT) die vorgegebene Aushärtungsvorrichtung (301) beschickt.

12. Vulkanisierstraße nach Anspruch 11, die einen Datenspeicher (M) umfasst, in dem eine Referenz (REF), die für die auf den Lagereinheiten (20) gelagerten Reifenrohlinge repräsentativ ist, zu jeder der Lagereinheiten (20) der Vielzahl von Lagereinheiten zugeordnet ist,
wobei die Befehls- und Steuereinheit zu Folgendem konfiguriert ist:
Erfassen eines Identifizierungscodes (ID) der Reifenrohlinge, die der vorgegebenen Aushärtungsvorrichtung (301) zugeführt werden sollen;
Durchführen eines Vergleichs zwischen dem Identifizierungscode (ID) und den Referenzen (REF);
Auswählen der ersten Speichereinheit (201) in Abhängigkeit von dem Vergleich.

13. Vulkanisierstraße nach Anspruch 11 oder 12, wobei dem ersten Roboterarm (60) ein erstes Vision-Tool (80) zugeordnet ist, das an dem ersten AGV (50) angebracht ist,
wobei das erste Vision-Tool (80) so konfiguriert ist, dass es bei Empfang des ersten Aufnahmebefehls (PC1) einen aufzunehmenden Reifenrohling (GT) auf der ersten Lagereinheit (201) lokalisiert,
wobei die Befehls- und Steuereinheit so konfiguriert ist, dass sie den ersten Roboterarm (60) lenkt, um den aufzunehmenden Reifenrohling aufzunehmen und ihn der vorgegebenen Aushärtungsvorrichtung (301) zuzuführen.

14. Vulkanisierstraße nach einem der Ansprüche 11 bis 13, wobei die Aushärtungsvorrichtungen (30) in mindestens einer ersten Reihe (L1) angeordnet sind, wobei ein erster Zuführbereich (FA1), der die erste Lagereinheit (201) in der Nähe der vorgegebenen Aushärtungsvorrichtung (301) enthalten kann, der ersten Reihe (L1) von Aushärtungsvorrichtungen (30) zugewandt ist, und ein erster Beschickungsgang (LA1) zwischen der ersten Reihe (L1) von Aushärtungsvorrichtungen (30) und dem ersten Zuführbereich (FA1) angeordnet ist,
wobei die Vulkanisierstraße ein drittes AGV (90) umfasst, das mit einem zweiten Roboterarm (100) ausgestattet ist und in dem ersten Beschickungsgang (LA1) arbeitet,
wobei die Befehls- und Steuereinheit zu Folgendem konfiguriert ist:
Empfangen eines Unterbrechungssignal (IS), das für eine Unterbrechungsstelle repräsentativ ist, an welcher der erste Beschickungsgang (LA1) unterbrochen werden soll;
Senden jeweiliger Positionierungssignale (PS1, PS2) an das erste AGV (50) und das dritte AGV (90), um das erste AGV (50) und das dritte AGV (90) zu in Bezug auf die Unterbrechungsstelle gegenüberliegenden Seiten des ersten Beschickungsgangs (LA1) zu bewegen.

15. Vulkanisierstraße nach Anspruch 14, umfassend:
eine zweite Reihe (L2) von Aushärtungsvorrichtungen (110), jeder Aushärtungsvorrichtung der zweiten Reihe (L2) entsprechend eine Beschickungsposition (LP1'-LPn'), einen zweiten Zuführbereich (FA2), der der zweiten Reihe (L2) von Aushärtungsvorrichtungen (110) zugewandt ist, einen zweiten Beschickungsgang (LA2), der zwischen der zweiten Reihe (L2) von Aushärtungsvorrichtungen (110) und dem zweiten Zuführbereich (FA2) angeordnet ist;
ein viertes AGV (120), das einen dritten Roboterarm (130) trägt;
wobei die Befehls- und Steuereinheit dazu konfiguriert ist, ein sechstes Befehlssignal (CS6) an das zweite AGV (40) zu senden, um das zweite AGV (40) zu aktivieren und eine zweite Lagereinheit (202) der Vielzahl von Lagereinheiten (20) in die Nähe einer anderen Aushärtungsvorrichtung (1101) zu transportieren, die zu der zweiten Reihe (L2) von Aushärtungsvorrichtungen (110) in dem zweiten Zuführbereich (FA2) gehört;
wobei die Befehls- und Steuereinheit dazu konfiguriert ist, ein siebtes Befehlssignal (CS7) an das vierte AGV (120) zu senden, um das vierte AGV (120) den zweiten Beschickungsgang (LA2) entlang bis zu der Beschickungsposition (LP1'-LPn') zu bewegen, die der anderen Aushärtungsvorrichtung (1101) entspricht;
wobei die Befehls- und Steuereinheit dazu konfiguriert ist, einen zweiten Aufnahmebefehl (PC2) an den dritten Roboterarm (130) zu senden, um den dritten Roboterarm (130) zu aktivieren, damit der dritte Roboterarm (130) einen Reifenrohling (GT) von der zweiten Lagereinheit (202) aufnimmt und mit dem Reifenrohling (GT) die andere Aushärtungsvorrichtung (1101) der zweiten Reihe (L2) von Aushärtungsvorrichtungen (110) beschickt.

## Revendications

1. Procédé d'acheminement de pneus crus vers des appareils de vulcanisation, ledit procédé comprenant le fait :
de fournir une pluralité d'unités de stockage (20), chacune supportant une pluralité de pneus crus (GT) ;
de fournir une pluralité d'appareils de vulcanisation (30), où une position de chargement (LP1-LPn) correspond à chaque appareil de vulcanisation ;
de fournir un premier véhicule à guidage automatique (AGV) (50), supportant un premier bras robotisé (60) ;
de fournir une unité d'instruction et de commande ;
de fournir, à proximité d'un appareil de vulcanisation donné (301) desdits appareils de vulcanisation (30), une première unité de stockage (201) de ladite pluralité d'unités de stockage (20) ;
d'envoyer audit premier AGV (50), par ladite unité d'instruction et de commande, un premier signal d'instruction (CS1) pour déplacer ledit premier AGV (50) vers la position de chargement (LP1-LPn) correspondant audit appareil de vulcanisation donné (301) ;
d'envoyer audit premier bras robotisé (60) supporté par ledit premier AGV (50), par ladite unité d'instruction et de commande, une première instruction de prélèvement (PC1) afin d'activer ledit premier bras robotisé (60), de sorte que ledit premier bras robotisé (60) prélève un pneu cru (GT) depuis ladite première unité de stockage (201) et charge ledit pneu cru (GT) dans ledit appareil de vulcanisation donné (301).

2. Procédé selon la revendication 1, dans lequel :
avant d'envoyer ladite première instruction de prélèvement (PC1), l'unité d'instruction et de commande reçoit dudit appareil de vulcanisation donné (301) un signal de demande (RS) représentatif du fait que ledit appareil de vulcanisation donné (301) est prêt à recevoir un pneu cru à vulcaniser.

3. Procédé selon l'une quelconque des revendications précédentes, dans lequel ladite pluralité d'appareils de vulcanisation (30) sont agencés en au moins une première rangée (L1), une première zone d'acheminement (FA1), adaptée pour contenir ladite première unité de stockage (201) à proximité dudit appareil de vulcanisation donné (301), orientée vers ladite première rangée (L1) d'appareils de vulcanisation (30), une première allée de chargement (LA1) étant interposée entre ladite première rangée (L1) d'appareils de vulcanisation (30) et ladite première zone d'acheminement (FA1).

4. Procédé selon la revendication 3, dans lequel ladite unité d'instruction et de commande envoie un deuxième signal d'instruction (CS2) à un deuxième AGV (40) afin d'activer ledit deuxième AGV (40) et de transporter ladite première unité de stockage (201) à proximité dudit appareil de vulcanisation donné (301) dans ladite première zone d'acheminement (FA1),
ledit procédé comprenant le fait de sélectionner, par ladite unité d'instruction et de commande, ladite première unité de stockage (201) parmi ladite pluralité d'unités de stockage (20) avant d'envoyer ledit deuxième signal d'instruction (CS2),
dans lequel ladite première unité de stockage (201) est sélectionnée en fonction des pneus crus (GT) stockés sur ladite première unité de stockage (201).

5. Procédé selon la revendication 4, comprenant le fait :
d'associer, à chacune des unités de stockage (20) de ladite pluralité d'unités de stockage, une référence (REF) représentant des pneus crus stockés sur chacune desdites unités de stockage (20) ;
d'acquérir, par ladite unité d'instruction et de commande, un code d'identification (ID) de pneus crus à acheminer vers ledit appareil de vulcanisation donné (301) ;
de faire, par ladite unité d'instruction et de commande, une comparaison entre ledit code d'identification (ID) et lesdites références (REF), et
de sélectionner ladite première unité de stockage (201) en fonction de ladite comparaison ;
d'associer, à chacune des unités de stockage (20) de ladite pluralité d'unités de stockage, un paramètre de temps (TP) représentant un temps de permanence des pneus crus (GT) stockés sur chacune desdites unités de stockage (20) ;
de déterminer, en fonction de ladite comparaison, par ladite unité d'instruction et de commande, un ensemble d'unités de stockage comprenant deux unités de stockage ou plus, et de sélectionner ladite première unité de stockage (201) dudit ensemble d'unités de stockage sur la base du paramètre de temps respectif (TP).

6. Procédé selon l'une quelconque des revendications précédentes, comprenant le fait :
d'associer à ladite première unité de stockage (201) un compteur respectif (COUNT), représentant le nombre de pneus crus (GT) qui sont présents sur ladite première unité de stockage (201) ;
de mettre à jour ledit compteur (COUNT), par ladite unité d'instruction et de commande, chaque fois qu'un pneu cru (GT) est prélevé de ladite première unité de stockage (201) ;
de vérifier, par ladite unité d'instruction et de commande, quand ledit compteur respectif (COUNT) arrive à zéro ;
lorsque ledit compteur respectif (COUNT) arrive à zéro, d'activer une opération de retrait afin de retirer ladite première unité de stockage (201).

7. Procédé selon l'une quelconque des revendications 3 à 5, ou selon la revendication 6 lorsqu'elle dépend de la revendication 3, dans lequel ladite pluralité de positions de chargement (LP1-LPn) sont définies dans ladite première allée de chargement (LA1),
dans lequel ledit premier signal d'instruction (CS1) amène ledit premier AGV (50) à se déplacer dans la position de chargement (LPi) correspondant audit appareil de vulcanisation donné (301).

8. Procédé selon l'une quelconque des revendications 3 à 5, 7, ou selon la revendication 6 lorsqu'elle dépend de la revendication 3, comprenant le fait de fournir, dans ladite première allée de chargement (LA1), un troisième AGV (90) supportant un deuxième bras robotisé (100),
dans lequel, lorsque ladite unité d'instruction et de commande reçoit un signal d'interruption (IS) représentant un point d'interruption où ladite première allée de chargement (LA1) sera interrompue, ladite unité d'instruction et de commande envoie des signaux de positionnement respectifs (PS1, PS2) audit premier AGV (50) et audit troisième AGV (90) afin de déplacer ledit premier AGV (50) et ledit troisième AGV (90) sur des côtés opposés de ladite première allée de chargement (LA1) par rapport audit point d'interruption.

9. Procédé selon l'une quelconque des revendications 3 à 5, 7, 8, ou selon la revendication 6 lorsqu'elle dépend de la revendication 3, dans lequel une pluralité de positions d'acheminement (FP1-FPn) sont définies dans ladite première zone d'acheminement (FA1), chacune étant associée à un appareil de vulcanisation correspondant (30),
dans lequel ledit deuxième signal d'instruction (CS2) amène ledit deuxième AGV (40) à déplacer ladite première unité de stockage (201) dans une position d'acheminement donnée (FPj).

10. Procédé selon l'une quelconque des revendications 3 à 5, 7 à 9, ou selon la revendication 6 lorsqu'elle dépend de la revendication 3, comprenant le fait :
de fournir une deuxième rangée (L2) d'appareils de vulcanisation (110), une position de chargement (LP1'-LPn') correspondant à chaque appareil de vulcanisation de ladite deuxième rangée (L2), une deuxième zone d'acheminement (FA2) orientée vers ladite deuxième rangée (L2) d'appareils de vulcanisation (110), une deuxième allée de chargement (LA2) étant interposée entre ladite deuxième rangée (L2) d'appareils de vulcanisation (110) et ladite deuxième zone d'acheminement (FA2) ;
de fournir, dans ladite deuxième allée de chargement (LA2), un quatrième AGV (120) supportant un troisième bras robotisé (130) ;
d'envoyer audit deuxième AGV (40), par ladite unité d'instruction et de commande, un sixième signal d'instruction (CS6) afin d'activer ledit deuxième AGV (40) et de transporter une deuxième unité de stockage (202) de ladite pluralité d'unités de stockage (20) à proximité d'un autre appareil de vulcanisation (1101) appartenant à ladite deuxième rangée (L2) d'appareils de vulcanisation (110) dans ladite deuxième zone d'acheminement (FA2) ;
d'envoyer audit quatrième AGV (120), par ladite unité d'instruction et de commande, un septième signal d'instruction (CS7) pour déplacer ledit quatrième AGV (120) le long de ladite deuxième allée de chargement (LA2) jusqu'à la position de chargement (LP1'-LPn') correspondant audit autre appareil de vulcanisation (1101) ;
d'envoyer audit troisième bras robotisé (130), par ladite unité d'instruction et de commande, une deuxième instruction de prélèvement (PC2) afin d'activer ledit troisième bras robotisé (130), de sorte que ledit troisième bras robotisé (130) prélève un pneu cru (GT) de ladite deuxième unité de stockage (202) et charge ledit pneu cru (GT) dans ledit autre appareil de vulcanisation de ladite deuxième rangée (L2) d'appareils de vulcanisation (110).

11. Ligne de vulcanisation comprenant :
des appareils de vulcanisation (30), où une position de chargement (LP1-LPn) correspond à chaque appareil de vulcanisation ;
une pluralité d'unités de stockage (20), chacune supportant une pluralité de pneus crus (GT) ;
un premier AGV (50), supportant un premier bras robotisé (60) ;
une unité d'instruction et de commande configurée pour :
i. envoyer audit premier AGV (50) un premier signal d'instruction (CS1) pour déplacer ledit premier AGV (50) vers la position de chargement (LP1-LPn) d'un appareil de vulcanisation donné (301) desdits appareils de vulcanisation (30) ;
ii. envoyer audit premier bras robotisé (60) supporté par ledit premier AGV (50) une première instruction de prélèvement (PC1) afin d'activer ledit premier bras robotisé (60), de sorte que ledit premier bras robotisé (60) prélève un pneu cru (GT) depuis une première unité de stockage (201) de ladite pluralité d'unités de stockage (20) à proximité dudit appareil de vulcanisation donné (301) et charge ledit pneu cru (GT) dans ledit appareil de vulcanisation donné (301).

12. Ligne de vulcanisation selon la revendication 11, comprenant une mémoire (M), dans laquelle une référence (REF) représentant des pneus crus stockés sur lesdites unités de stockage (20) est associée à chacune des unités de stockage (20) de ladite pluralité d'unités de stockage,
dans laquelle ladite unité d'instruction et de commande est configurée pour :
acquérir un code d'identification (ID) des pneus crus à acheminer vers ledit appareil de vulcanisation donné (301) ;
faire une comparaison entre ledit code d'identification (ID) et lesdites références (REF) ;
sélectionner ladite première unité de stockage (201) en fonction de ladite comparaison.

13. Ligne de vulcanisation selon la revendication 11 ou 12, dans laquelle ledit premier bras robotisé (60) est associé à un premier outil de vision (80) monté sur ledit premier AGV (50),
dans laquelle, lors de la réception de ladite première instruction de prélèvement (PC1), ledit premier outil de vision (80) est configuré pour localiser, sur ladite première unité de stockage (201), un pneu cru (GT) à prélever,
dans laquelle ladite unité d'instruction et de commande est configurée pour entraîner ledit premier bras robotisé (60) afin de prélever ledit pneu cru à prélever et l'acheminer vers ledit appareil de vulcanisation donné (301) .

14. Ligne de vulcanisation selon l'une quelconque des revendications 11 à 13, dans laquelle lesdits appareils de vulcanisation (30) sont agencés en au moins une première rangée (L1), une première zone d'acheminement (FA1), adaptée pour contenir ladite première unité de stockage (201) à proximité dudit appareil de vulcanisation donné (301), orientée vers ladite première rangée (L1) d'appareils de vulcanisation (30), une première allée de chargement (LA1) étant interposée entre ladite première rangée (L1) d'appareils de vulcanisation (30) et ladite première zone d'acheminement (FA1),
dans laquelle ladite ligne de vulcanisation comprend un troisième AGV (90), équipé d'un deuxième bras robotisé (100) et fonctionnant dans ladite première allée de chargement (LA1),
dans laquelle ladite unité d'instruction et de commande est configurée pour :
recevoir un signal d'interruption (IS), représentant un point d'interruption où ladite première allée de chargement (LA1) sera interrompue ;
envoyer audit premier AGV (50) et audit troisième AGV (90) des signaux de positionnement respectifs (PS1, PS2) afin de déplacer ledit premier AGV (50) et ledit troisième AGV (90) sur des côtés opposés de ladite première allée de chargement (LA1) par rapport audit point d'interruption.

15. Ligne de vulcanisation selon la revendication 14, comprenant :
une deuxième rangée (L2) d'appareils de vulcanisation (110), une position de chargement (LP1'-LPn') correspondant à chaque appareil de vulcanisation de ladite deuxième rangée (L2), une deuxième zone d'acheminement (FA2) orientée vers ladite deuxième rangée (L2) d'appareils de vulcanisation (110), une deuxième allée de chargement (LA2) étant interposée entre ladite deuxième rangée (L2) d'appareils de vulcanisation (110) et ladite deuxième zone d'acheminement (FA2) ;
un quatrième AGV (120), supportant un troisième bras robotisé (130) ;
ladite unité d'instruction et de commande étant configurée pour envoyer audit deuxième AGV (40) un sixième signal d'instruction (CS6) afin d'activer ledit deuxième AGV (40) et de transporter une deuxième unité de stockage (202) de ladite pluralité d'unités de stockage (20) à proximité d'un autre appareil de vulcanisation (1101) appartenant à ladite deuxième rangée (L2) d'appareils de vulcanisation (110) dans ladite deuxième zone d'acheminement (FA2) ;
ladite unité d'instruction et de commande étant configurée pour envoyer audit quatrième AGV (120) un septième signal d'instruction (CS7) pour déplacer ledit quatrième AGV (120) le long de ladite deuxième allée de chargement (LA2) jusqu'à la position de chargement (LP1'-LPn') correspondant audit autre appareil de vulcanisation (1101) ;
ladite unité d'instruction et de commande étant configurée pour envoyer audit troisième bras robotisé (130) une deuxième instruction de prélèvement (PC2) afin d'activer ledit troisième bras robotisé (130), de sorte que ledit troisième bras robotisé (130) prélève un pneu cru (GT) de ladite deuxième unité de stockage (202) et charge ledit pneu cru (GT) dans ledit autre appareil de vulcanisation (1101) de ladite deuxième rangée (L2) d'appareils de vulcanisation (110).
